# EUROPÄISCHE PATENTSCHRIFT

(11) **EP 0 438 770 B1**
(45) Veröffentlichungstag und Bekanntmachung des Hinweises auf die Patenterteilung: **12.04.1995**
(21) Anmeldenummer: 90125331.0
(22) Anmeldetag: 22.12.1990
(51) Int. Cl.: H04B 7/005

(54) **Energiesparschaltung in einer mobilen Vorrichtung zur drahtlosen Kommunikation**
Power saving circuit in a mobile device for wireless communication
Montage économisant l'énergie dans un dispositif mobile pour la radio communication

(30) Priorität: 23.01.1990 DE 4001810
(43) Veröffentlichungstag der Anmeldung: 31.07.1991
(73) Patentinhaber: LOEWE OPTA GMBH, 96305 Kronach (DE)
(72) Erfinder: Heine, Kurt, W-8218 Unterwössen (DE)

(56) Entgegenhaltungen:
- WO-A-86/00486
- GB-A- 2 174 573
- US-A- 4 392 245
- US-A- 4 574 248

## Beschreibung

Die Erfindung betrifft eine Energiesparschaltung in einer mobilen Vorrichtung zur drahtlosen Kommunikation mit einer festen Empfangs/Sendestation mit den im Oberbegriff des Anspruchs 1 angegebenen Merkmalen.

Eine derartige Energiesparschaltung in einer mobilen Vorrichtung zur drahtlosen Kommunikation ist aus der US-PS 4,811,421 sowie aus der JP-PS 60-130931 (A) bekannt.

Es ist ferner ein schnurloses Telefon bekannt, bei dem die Sendeleistung in Abhängigkeit von der Entfernung zwischen der Vorrichtung und der festen Empfangs/Sendestation einstellbar ist. Ein ähnliches System ist weiterhin in der US-A-4 574 248 beschrieben. Aus der EP-A-0 160 993 ist weiterhin ein Funksystem bekannt, bei dem die Sendeleistung einer jeweiligen Funkstation in Abhängigkeit von der Übertragungsqualität eingestellt wird.

Aus der DE-OS 38 17 621 A1 ist ein Fernsteuersystem mit einer batterie- und/oder akkumulatorgespeisten Fernbedienungseinheit bekannt, mittels der Bedienfunktionen von Geräten ferngesteuert werden. Der Benutzer gibt hierbei in die batterie- und/oder akkumulatorgespeiste Fernbedienungseinheit Fernsteuerbefehle ein, welche über einen drahtlosen Übertragungskanal zu einem im ferngesteuerten Gerät angeordneten Empfänger gesendet werden. In dem Fernbedienungsgeber ist eine Energiesparschaltung vorgesehen, über die die Sendeleistung in Abhängigkeit von der Enffernung zwischen dem Fernbedienungsgeber und dem zu steuernden Gerät einstellbar ist. Dadurch wird ein schnelles Entladen der Batterie bzw. des Akkumulators vermieden. Die Veränderung der Sendeleistung kann vom Benutzer entweder manuell oder von einer in dem Fernbedienungsgeber angeordneten programmgesteuerten Steuereinrichtung vorgenommen werden. Die Fernsteuerung ist allgemein einsetzbar, z.B. in Geräte der Unterhaltungselektronik, Werkzeugmaschinen usw.

Die Druckschrift lehrt weiterhin, in dem ferngesteuerten Gerät zum Zwecke der Ansteuerung der Energiesparschaltung einen Sender vorzusehen, der über den drahtlosen Übertragungskanal ein Quittierungssignal zu dem Fernbedienungsgeber aussendet, wobei Schwankungen des Empfangsleistungspegels durch entsprechende Änderung der Sendeleistung des jeweiligen Senders ausgleichbar sind. Die Einstellung kann dabei auch in Abhängigkeit des gemessenen Empfangsleistungspegels des das Quittierungssignal aussendenden Senders verändert werden. Bei dem bekannten System, das nicht trägerfrequent arbeitet, werden gesonderte Quittierungssignale ausgesendet, anhand derer die Sendeleistung des jeweiligen Senders in Abhängigkeit von am Ort des jeweiligen Senders gemessenen Empfangsleistungspegel veränderbar ist.

Aus der DE-PS 826 936 ist ein Verfahren zum selbsttätigen Ausgleich von Feldstärkeschwankungen bei drahtlosen Nachrichtenübertragungen bekannt, bei denen die Sendeleistung am einen Ende der Verbindung durch den Empfänger und am anderen Ende über einen Übertragungskanal in der Gegenrichtung selbsttätig geregelt wird. Im Falle wechselseitiger Funkverbindungen wird dabei die Regelspannung für die eine Richtung jeweils auf der Funkverbindung für die andere Richtung übertragen, zu welchem Zweck ein oder mehrere Pilottöne mit verschiedenen Frequenzen, die die Stellinformation beinhalten, zur Sendeleistungsregelung übertragen und ausgewertet werden. Mit der vorgesehenen Regelung wird erreicht, daß der Empfänger über die Gegenfunkverbindung den von ihm empfangenen Sender in der Leistung herunterregelt, sobald die Empfangsspannung einen bestimmten Mindestbetrag überschreitet.

Aus der DE-OS 18 11 456 ist eine Sparschaltung für batteriebetriebene Empfänger bekannt, bei der der Speisestrom des Empfängers beim Ausbleiben eines Empfangssignals gedrosselt wird. Die Schaltung weist eine Halbleiterschaltervorrichtung auf, die den Strompfad zum Empfänger abwechselnd leitend und nichtleitend macht und die bei Empfang eines Empfangssignals, auf das der Empfänger ansprechen kann, in eingeschalteter Stellung gehalten wird. Zum Zwecke der Schaffung einer einfachen und sicher arbeitenden Batteriesparschaltung zur Erzeugung einer stabilisierten Ausgangsspannung ist dabei vorgesehen, daß die Halbleiterschaltervorrichtung als Reihenstabilisierungselement einer im wesentlichen konstanten Spannungsversorgung geschaltet ist, welche die Leistungsversorgung des Empfängers bildet.

Weiterhin ist aus der DE-OS 29 31 923 ein Funknetz mit einer Leitstelle und einer Unterstation sowie mit zwei oder mehreren Sende/Empfangsanlagen bekannt, welche letzteren eine Steuerschaltung zur Steuerung der Sendeleistung aufweisen, die sicherstellt, daß bei einem hohen Empfangspegel eine große und bei niedrigem Empfangspegel eine kleine Sendeleistung abgestrahlt wird.

Ausgehend von dem angegebenen Stand der Technik liegt der Erfindung die Aufgabe zugrunde, eine Energiesparschaltung eingangs genannter Art so weiterzubilden, daß bei Inbetriebnahme der mobilen Vorrichtung durch den Benutzer zum Aufbau einer Kommunikation unabhängig von der Entfernung zur festen Empfangs- und Sendestation eine gesicherte Übertragung der Informationen vom Handapparat zur festen Station ermöglicht wird, ohne daß dies zu einer nennenswerten Belastung der Batterie oder des Akkumulators führt.

Die Aufgabe wird nach der Erfindung durch die im Kennzeichen des Anspruchs 1 angegebenen Merkmale gelöst.

Vorteilhafte Weiterbildungen der Erfindung und Ausgestaltungen der Schaltungen sind in den abhängigen Ansprüchen im einzelnen angegeben.

Beim Einschalten der mobilen Vorrichtung ist in der Ausführung nach Anspruch 1 vorgesehen, daß zunächst die Sendeschaltung über eine Steuerschalteinrichtung voll aufgesteuert wird und erst dann eine Stromaufnahmeregelung durch die Steuerspannung einsetzt, wenn eine erste Rückantwort von der angesprochenen ortsfesten Empfangsstation vorliegt, d.h. die Kommunikation aufgebaut ist. Hierdurch soll erreicht werden, daß auch entfernte feste Stationen, z.B. solche im cellularen Funktelefonnetz, mit der mobilen Vorrichtung noch erreichbar sind.

Eine weitere Reduzierung der Energieentnahme der Stromquelle ist durch Anwendung einer Ausführung nach Anspruch 2 möglich, indem jeweils nur die Sende- oder Empfängerschaltung an die Stromquelle angeschlossen wird. Zu diesem ZwecK ist ein elektronischer oder mechanischer Umschalter vorgesehen, mit dem die Kommunikation jeweils hergestellt wird. Unabhängig davon wird die Sendeleistung von der Empfangsfeldstärke des von der mobilen Vorrichtung empfangenen trägerfrequenten Signals geregelt. Somit wird die Stromaufnahme bei Vorhandensein eines ortsnahen festen Empfängers heruntergeregelt, während sie mit zunehmender Entfernung der mobilen Vorrichtung zum ortsfesten Empfänger hochgeregelt wird. Die Anschaltung der Stromversorgungsquelle kann, wie im Anspruch 3 angegeben, auch über einen elektronischen Umschalter in Form eines auf phonetische Laute ansprechenden Schalters erfolgen, so daß jeweils im Halbduplexbetrieb abhängig von der Eingabe von Lauten in das Mikrofon oder die Sprechkapsel, z.B. bei einem Handtelefongerät, die Empfangsschaltung, abgeschaltet und die Sendeschaltung angeschaltet wird und nach einem bestimmten Zeitfenster nach der letzten phonetischen Eingabe eine automatische Umschaltung auf den Empfänger erfolgt. Das Zeiffenster kann dabei wenige Millisekunden bis zu einer halben Sekunde dauern, je nach Ausbildung der mobilen Vorrichtung in dem zu bedienenden Dienst bzw. Einsatzbereich. Ebenso ist aber auch ein Vollduplexbetrieb der Sende- und Empfängerschaltung möglich, wobei allerdings, da die Empfängerschaltung dann ständig auf Empfang steht, ein etwas höherer Energieverbrauch gegeben ist. Der Energieverbrauch und damit die Entladezeit des Akkumulators oder der Batterie bestimmt sich aber im wesentlichen durch die Sendeleistung der Sendeschaltung, deren Leistungsaufnahme wesentlich höher ist als die der Empfängerschaltung.

Nach Anspruch 5 ist zur weiteren Energieeinsparung vorgesehen, daß bei Verwendung einer Frequenzsyntheseschaltung, wie PLL oder FFL die Teiler über den elektronischen Umschalter jeweils an die Empfangs- oder Sendeschaltung angeschaltet werden. D.h., auch hierüber ist es auf einfache Weise möglich, die Sende- und Empfängerschaltung betriebsmäßig zu entkoppeln und deren Stromaufnahme zu reduzieren, wenn der eine oder andere Betriebszustand vom Gerät eingenommen werden soll.

In jeder Empfängerschaltung einer mobilen Vorrichtung ist eine Regelschleife vorgesehen, mit der in Abhängigkeit des Pegels des Empfangssignals, des Zwischenfrequenzsignals, des demodulierten Nutzsignals oder des Ausgangs einer Verstärkerstufe die vorhergehenden oder nachfolgenden Verstärkerstufen der Empfängerschaltung auf einen konstanten Pegel hingeregelt werden, um die einzelnen Verstärkerstufen in Abhängigkeit von dem empfangenen Empfangssignal nicht zu übersteuern und Verzerrungen zu vermeiden. In einem solchen Regelkreis wird bis zum demodulierten Signal der Pegel der Trägerfrequenz mit einbezogen. In einer weiteren Ausgestaltung der Erfindung nach Anspruch 6 ist vorgesehen, daß von dieser Regelspannung, z.B. durch. Integration und/oder Verstärkung, eine Informationsspannung für die Spannung der Erzeugerschaltung angelegt wird, deren Steuerspannung die Stromaufnahme der Sendeleistungsverstärkerstufe steuert. Es kann aber auch eine gesonderte Meßschaltung vorgesehen sein, wie sie im Anspruch 1 angegeben ist. Auch ist es möglich, eine Informationsspannung aus dem demodulierten Nutzsignal am Demodulatorausgang abzuleiten, wenn in den Vorstufen keine begrenzenden, das Eingangssignal bereits auf einen bestimmten Pegel festlegenden Verstärkerstufen eingesetzt sind.

Mit der Erfindung wird erreicht, daß z.B. bei tragbaren Funktelefonen die Sprechdauer wesentlich erhöht werden kann, da entfernungsabhängig zur Empfangsstation nur eine geringe Sendeleistungsaufnahme gegeben ist.

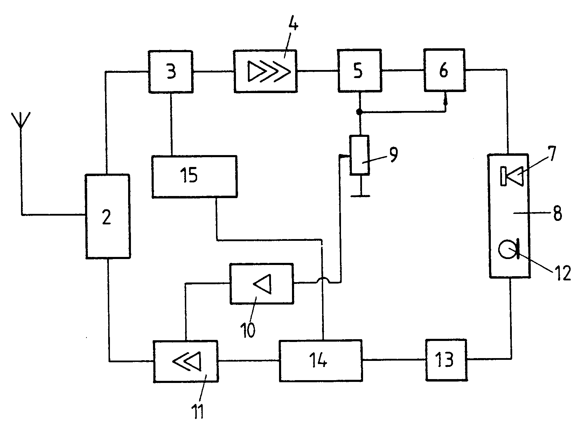

Die Erfindung wird nachfolgend anhand eines in der Zeichnung dargestellten Ausführungsbeispiels näher erläutert.

Bei dem Funktelefongerät ist mit der Antenne 1 eine Weiche bzw. Filteranordnung 2 verbunden, über die jeweils das Empfangssignal eingespeist oder das Sendesignal ausgegeben wird. Das Empfangssignal wird dem Empfangstuner 3 zugeführt, dessen Ausgangssignal über einen Zwischenfrequenzverstärker 4 dem Demodulator 5 zugeführt wird. In dem Demodulator wird das trägerfrequent übertragene Signal nach Aufbereitung in dem Zwischenfrequenzverstärker demoduliert, so daß an dessen Ausgang nur noch das Nutzsignal anliegt, das in einer NF-Verstärkerstufe 6 verstärkt der Hörerkapsel 7 des Handapparates 8 zugeführt wird. Vom demodulierten Signal wird zugleich eine Regelspannung, die proportional dem Empfangspegel ist, abgeleitet. Diese Regelspannung dient auch zur Regelung des NF-Verstärkers 6. Von einem als Spannungsteiler vorgesehenen gegen Masse geschalteten Widerstand 9 wird die Regelspannung abgegriffen und einem Regelspannungsverstärker 10 zugeführt, der zugleich eine Halteschaltung aufweist, um die Steuerspannung auch dann halten zu können, wenn keine Regelspannung anliegt. Am Ausgang des Regelspannungsverstärkers liegt eine gleichgerichtete nahezu konstant gehaltene Regelspannung an, die erst bei längerer Veränderung der Empfangsfeldstärke sich proportional ändert. Mit der Ausgangsspannungsgröße wird der Sendeendverstärker 11 in seiner Stromaufnahme geregelt, so daß der Leistungsverbrauch des Sendeendverstärkers 11 stets der Empfangsfeldstärke proportional angepaßt ist und die Leistungsaufnahme auf ein Minimum reduziert wird. Mit dem Sendeendverstärker 11 werden die in die Sprechkapsel 12 im Handapparat 8 eingegebenen Tonsignale nach deren Verstärkung in einem Niederfrequenztonverstärker 13 und mit einer Trägerfrequenz in einer Sender/Modulatoreinheit 14 moduliert, verstärkt und an die Weiche bzw. Filteranordnung 2 ausgegeben und über die Antenne 1 abgestrahlt. Die Sender/Modulatoreinheit 14 weist, genauso wie der Empfangstuner 3, eine Frequenzsyntheseschaltung auf, die über eine gemeinsame PLL 15 auf eine bestimmte Empfangsfrequenz und Sendefrequenz abstimmbar ist. Hier kann auch eine FFL eingesetzt werden. Die Ausgänge der FFL oder PLL sind jeweils an die Empfängertunerschaltung 3 oder an die Sendermodulatoreinheit 14 anschaltbar. Zweckmäßigerweise weist die Schaltung einen Mikroprozessor auf, über den die Frequenzteiler wahlweise oder beide parallel einschaltbar sind, so daß auch Halbduplexbetrieb, je nach Ausführung, möglich ist. Mit einem eigenen Oszillator erzeugt die PLL zugleich die notwendige Mischfrequenz für den Zwischenfrequenzverstärker 4.

Die Erfindung ist nicht nur in ein frequenzmoduliertes System sondern auch in ein amplitudenmoduliertes System einsetzbar. Andere Ausgestaltungsformen der Schaltung sind ebenfalls möglich. Im vorliegenden Fall wird davon ausgegangen, daß am Demodulatorausgang eine empfangspegelabhängige Regelspannung erzeugt wird, die das NF-Signal auf einen konstanten Pegel hinregelt. Es kann aber ebensogut eine aus dem Zwischenfrequenzsignal abgeleitete, von der Empfangsfeldstärke abhängige Regelspannung, die dem Tuner zugeführt wird, für die Erzeugung der Steuerspannung verwendet werden.

## Patentansprüche

1. Energiesparschaltung in einer mobilen Vorrichtung zur drahtlosen Kommunikation mit einer festen Empfangs/Sendestation, welche mobile Vorrichtung eine Empfänger- und Sendeschaltung für Ton- und/oder Datensignale und eine Stromversorgungsquelle mit einer Batterie oder einem Akkumulator aufweist, wobei die Sendeleistung in Abhängigkeit von der Entfernung zwischen der Vorrichtung und der festen Empfangs/Sendestation einstellbar ist, die Sendeleistung der Sendeschaltung (11, 14) in der mobilen Vorrichtung in Abhängigkeit von der Empfangsfeldstärke des empfangenen Signals eingestellt ist, das ein eine Trägerfrequenz modulierendes Nutzsignal enthält, eine Meßschaltung (9) im Zweig der Empfängerschaltung (3, 4, 5, 6) zum Feststellen des Empfangspegels des empfangenen Träger- oder Nutzsignals, eine Steuerspannungserzeugungsschaltung (10), die in Abhängigkeit von der Empfangsfeldstärke eine Steuerspannung zur Einstellung der Verstärkung des Endverstärkers (11) der Sendeschaltung an diese abgibt, und eine Steuerspannungshalteschaltung, die die Steuerspannung proportional dem gemessenen Empfangspegel auch während der Zeit aufrechterhält, während der die Sendeschaltung (14, 11) Informationen aussendet und die Steuerspannung auf einen neuen Wert einstellt, wenn beim nächsten Empfangsbetrieb ein geänderter Empfangspegel festgestellt wird, dadurch gekennzeichnet, daß in der Vorrichtung eine elektrische Schalteinrichtung (10) vorgesehen ist, die beim Einschalten der Vorrichtung diese auf Sendebetrieb schaltet und die Steuerspannungsquelle zunächst abschaltet, wobei die Steuerspannung auf ein solches Potential gelegt ist, daß der Endverstärker (11) der Sendeschaltung voll aufsteuert und erst die Steuerspannungserzeugungsschaltung anschaltet, wenn die Vorrichtung über die Schalteinrichtung auf Empfangsbetrieb geschaltet ist.

2. Energiesparschaltung nach Anspruch 1, dadurch gekennzeichnet, daß ein mechanischer oder elektronischer Umschalter vorgesehen ist, über den die Stromversorgungsquelle in der ersten Schaltstellung nur an die Empfängerschaltung und in der zweiten Schaltstellung nur an die Sendeschaltung anschaltbar ist.

3. Energiesparschaltung nach Anspruch 2, dadurch gekennzeichnet, daß die Stromversorgungsquelle an die Sendeschaltung über einen durch phonetische Laute steuerbaren Umschalter anschaltbar ist, welcher Umschalter von einer Erkennungsschaltung gesteuert wird, die beim Erfassen eines in die Sprechkapsel oder das Mikrophon der Vorrichtung eingegebenen bestimmten oder unbestimmten Lautes ein Schaltsignal abgibt, welches Schaltsignal während einer vorbestimmbaren Zeitspannung aufrechterhalten bleibt und durch weitere Laute verlängerbar ist.

4. Energiesparschaltung nach einem der Ansprüche 1 bis 3, dadurch gekennzeichnet, daß Empfangs- und Sendeschaltung im Duplexbetrieb betreibbar sind und beide Schaltungen beim Einschalten der Vorrichtung mit der Betriebsspannungsquelle verbunden sind.

5. Energiesparschaltung nach Anspruch 1, dadurch gekennzeichnet, daß eine Frequenzsyntheseschaltung, wie PLL oder FFL, zur festen Einstellung der Empfangs- oder der Sendefrequenz vorgesehen ist, deren Steuerausgänge über einen weiteren Schalter jeweils an die Teiler der Empfängerschaltung oder an die Teiler der Sendeschaltung anschaltbar sind.

6. Energiesparschaltung nach Anspruch 1, dadruch gekennzeichnet daß von der Regelspannung für eine Verstärkerstufe für die automatische Pegelregelung der Empfängerschaltung eine Informationsspannung an der Steuerspannungserzeugungsschaltung anliegt.

7. Energiesparschaltung nach Anspruch 1, dadurch gekennzeichnet, daß vom Demodulator (5) der Empfängerschaltung ein Signal abgegriffen und einer Integrationsschaltung zugeführt wird, die die Steuerspannungserzeugungsschaltung (10) bildet und die Steuerspannung für den Endverstärker (11) der Sendeschaltung liefert.

## Claims

1. Energy-saving circuit in a mobile device for wireless communication with a fixed receiving/transmitting station, which mobile device comprises a reception and transmission circuit for audio and/or data signals and a current supply source with a battery or an accumulator, wherein the transmission power is settable in dependence on the distance between the device and the fixed receiving/transmitting station and the transmission power of the transmission circuit (11, 14) is set in the mobile device in dependence on the reception field strength of the received signal, which contains an information signal modulating a carrier frequency, a measuring circuit (9) in the branch of the receiving circuit (3, 4, 5, 6) for establishing the reception level of the received carrier signal or information signal, a control voltage generating circuit (10), which in dependence on the reception field strength delivers a control voltage to the output amplifier (11) of the transmission circuit for setting of the amplification thereof, and a control voltage holding circuit, which keeps the control voltage proportional to the measured reception level even during the time during which the transmission circuit (14, 11) transmits data and sets the control voltage to a new value if a changed reception level is established at the next reception operation, characterised thereby that provided in the device is an electrical switching equipment (10) which on switching-on of the device switches this to transmitting operation and initially switches off the control voltage source, wherein the control voltage is placed at such a potential that the output amplifier (11) of the transmission circuit is fully controlled on and only switches to the control voltage generating circuit when the device is switched by way of the switching equipment to receiving operation.

2. Energy-saving circuit according to claim 1, characterised thereby that a mechanical or electronic changeover switch is provided by way of which the current supply source is switchable in the first switch setting only to the receiving circuit and in the second switch setting only to the transmission circuit.

3. Energy-saving circuit according to claim 2, characterised thereby that the current supply source is switchable to the transmission circuit by way of a changeover switch controllable by phonetic sound, which changeover switch is controlled by a recognition circuit, which on detection of a specific or non-specific sound given into the speaking capsule or microphone of the device delivers a switching signal, which switching signal remains maintained during a predetermined time interval and is extendible by further sound.

4. Energy-saving circuit according to one of claims 1 to 3, characterised thereby that the reception circuit and transmission circuit are operable in duplex operation and both circuits are connected with the operating voltage source on switching-on of the device.

5. Energy-saving circuit according to claim 1, characterised thereby that a frequency synthesising circuit, such as PPL or FFL, is provided for the fixed setting of the receiving or transmitting frequency, the control outputs of which are respectively connectible by way of a further switch to the divider of the receiving circuit or to the divider of the transmission circuit.

6. Energy-saving circuit according to claim 1, characterised thereby that a data voltage for an amplification stage for the automatic level regulation of the receiving circuit is applied to the control voltage generating circuit from the regulating voltage.

7. Energy-saving circuit according to claim 1, characterised thereby that a signal is tapped off from the demodulator (5) of the receiving circuit and fed to an integration circuit, which forms the control voltage generating circuit (10) and delivers the control voltage for the output amplifier (11) of the transmission circuit.

## Revendications

1. Circuit économiseur d'énergie incorporé dans un dispositif mobile destiné à la télécommunication sans fil, comportant un poste émetteur/récepteur fixe, dispositif mobile qui présente un circuit récepteur et émetteur pour des signaux sonores et/ou des données et une source d'alimentation énergétique comportant une batterie ou un accumulateur, la puissance d'émission étant réglable en fonction de la distance entre le dispositif et le poste émetteur/récepteur fixe, la puissance d'émission du circuit émetteur (11, 14) incorporé dans le dispositif mobile étant réglée en fonction de l'intensité du champ de réception du signal reçu qui contient un signal utile modulant la fréquence porteuse, un circuit de mesure (9) monté dans la branche du circuit récepteur (3, 4, 5, 6) pour la vérification du niveau de réception du signal utile ou porteur reçu, un circuit (10) de génération de la tension de commande, lequel délivre au circuit récepteur, en fonction de l'intensité du champ de réception, une tension de commande pour le réglage de l'amplification de l'amplificateur final (11) dudit circuit émetteur, et un circuit de maintien de la tension de commande qui maintient cette tension de commande proportionnellement au niveau de réception mesuré, même pendant le temps nécessaire pour que le circuit émetteur (14, 11) émette des informations et règle la tension de commande sur une nouvelle valeur, si lors de l'opération de réception suivante, une modification du niveau de réception a été constatée, caractérisé en ce que, à l'intérieur du dispositif est prévu un commutateur électrique (10), lequel, lors de la mise en circuit du dispositif, commute celui-ci sur la fonction d'émission et dans un premier temps coupe la source de la tension de commande, cette tension de commande étant placée à un potentiel tel que l'amplificateur final (11) du circuit émetteur fonctionne à pleine puissance et ne mette en service le circuit générateur de la tension de commande que si le dispositif est commuté sur réception, par le commutateur.

2. Circuit économiseur d'énergie, selon la revendication 1, caractérisé par la présence d'un commutateur mécanique ou électronique, au moyen duquel la source d'alimentation énergétique, dans la première position de commutation, n'est connectable qu'au circuit récepteur et dans la seconde position de commutation, n'est connectable qu'au circuit émetteur.

3. Circuit économiseur d'énergie, selon la revendication 2, caractérisé en ce que la source d'alimentation énergétique est commutable sur le circuit émetteur par un commutateur commandable par sons phonétiques, ce commutateur étant piloté par un circuit détecteur qui, lorsqu'un son déterminé ou indéterminé est saisi par le transmetteur ou le microphone du dispositif, émet un signal de commutation,lequel reste maintenu pendant un laps de temps prédéterminable et peut être prolongé par d'autres sons.

4. Circuit économiseur d'énergie, selon l'une des revendications 1 à 3, caractérisé en ce que le circuit émetteur et le circuit récepteur peuvent fonctionner en duplex et que ces deux circuits sont reliés à la source de tension opérationnelle dès la mise en service du dispositif.

5. Circuit économiseur d'énergie, selon la revendication 1, caractérisé par la présence d'un circuit de synthèse de fréquences, tel qu'un circuit PLL ou FFL, permettant de régler à un niveau fixe la fréquence de réception ou d'émission, les sorties de commande de ce circuit étant connectables par l'autre connecteur, respectivement à des diviseurs du circuit récepteur, ou à des diviseurs du circuit émetteur.

6. Circuit économiseur d'énergie, selon la revendication 1, caractérisé en ce que, à partir de la tension de réglage, une tension d'information s'applique sur le circuit générateur de la tension de commande, destinée à un étage amplificateur, permettant le réglage automatique du niveau du circuit récepteur.

7. Circuit économiseur d'énergie, selon la revendication 1, caractérisé en ce que, du démodulateur (5) du circuit récepteur, un signal est prélevé et amené à un circuit d'intégration qui constitue le circuit générateur de la tension de commande (10) et qui fournit la tension de commande à l'amplificateur final (11) du circuit émetteur.
